Europäisches Patentamt

**European Patent Office**

Office européen des brevets

(11) Publication number: **0 215 760**
A2

# (12) EUROPEAN PATENT APPLICATION

(21) Application number: **86850297.2**

(22) Date of filing: **10.09.86**

(51) Int. Cl.⁴: **B 23 Q 1/24**

(30) Priority: **17.09.85 SE 8504225**

(43) Date of publication of application: **25.03.87 Bulletin 87/13**

(84) Designated Contracting States: **DE FR GB IT SE**

(71) Applicant: **AB KNIGHT KONSULTERANDE INGENJÖRER, Stora Gatan 36, S-722 12 Västeras (SE)**

(72) Inventor: **Edenäs, Bernt H., Byalagsgatan 10, S-72591 Västeras (SE)**

(74) Representative: **Hellborg, Torild et al, H. Albihns Patentbyra AB Box 7664, S-103 94 Stockholm (SE)**

(54) **Self-centering steady rest.**

(57) A self-centering steady rest according to the invention intended to improve the present technical ability of a steady rest to center a round workpiece with greater accuracy. This is achieved by virtue of the fact that the steady rest has three gripper pivot arms with support rollers, said pivot arms having the same bending stiffness regardless of its gripping force and that one of the pivot arms has an extended opening movement so that the workpieces of approximately the maximum gripping diameter can be easily inserted and removed from the steady rest with the bridge loader. Moreover, the gripping force of the pivot arms can be adapted to the value required to make the workpiece center and thus the life of the support rollers can be appreciably increased.

1

## SELF-CENTERING STEADY REST

The present invention relates to a self-centering steady rest for lathes, grinders and similar machine tools where the steady rest is constructed of three pivoting gripper arms provided with support rollers, said arms being automatically or manually adjustable for centering a round workpiece. Previously known steady rests are usually constructed with three adjustable support rollers in such a way that when the rollers are set for a certain shaft diameter, they are locked in their positions and are periodically subjected to unnecessarily high loads from the shaft being machined, and therefore the rollers wear out quickly and must be replaced with new rollers. These steady rests also have a poor self-centering accuracy because the holders or arms for the three support rollers usually have different bending stiffnesses when bent out under the changing pressure on the support rollers during machining. These steady rests are also somewhat unpractical as regards insertion and removal of the workpiece with an industrial robot or bridge loader since the support rollers do not open sufficiently. The purpose of the present invention is to remove said disadvantages and this is achieved according to the invention by a steady rest as described by way of introduction which is characterized in that the three pivotable gripping arms with support rollers are of equal length and have the same outward bending stiffness when the force on the arms is changed after the steady rest is set in the machine tool, and that the size of the changed force on the arms is adapted via a computer or control unit to the value required to center the workpiece for machining, thus holding the centering deviation between the grip center of the steady rest and the center of the cylindrical workpiece to a minimum or nearly zero as well as increasing the life of the support rollers.

Preferred embodiments of the invention are defined in the subclaims.

The invention will be described in more detail with reference to the accompanying drawing, wherein

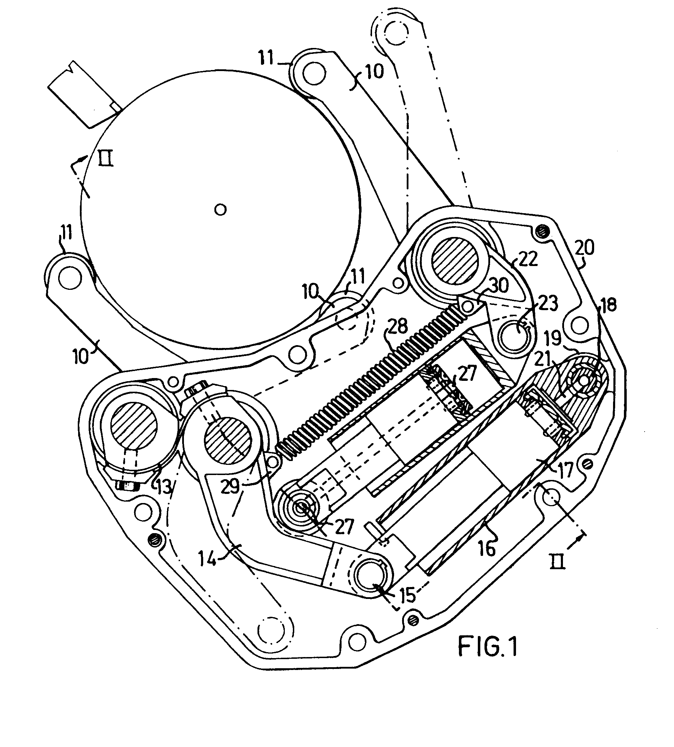

Fig. 1 shows an automatic self-centering steady rest in cross-section and

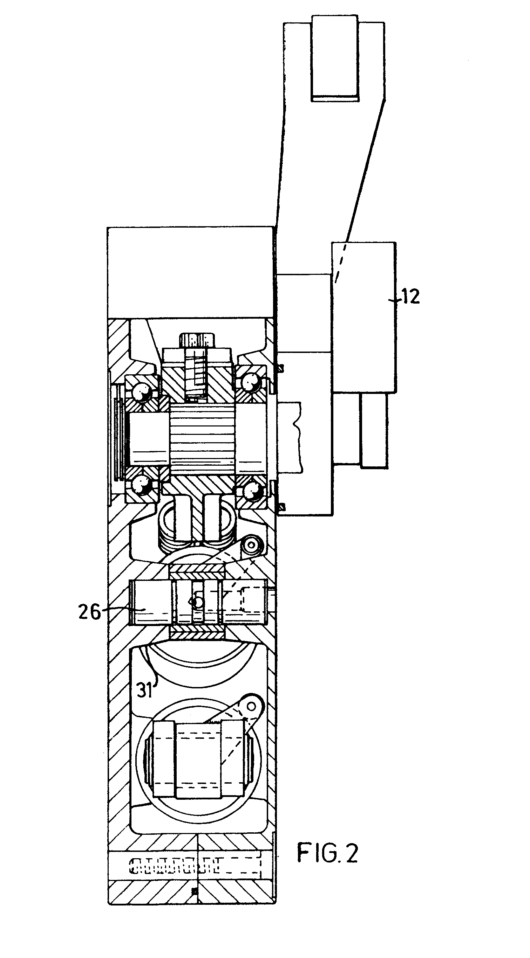

Fig. 2 shows a section through the steady rest along the line A-B in Fig. 1.

In the drawing, the three pivot arms with their support rollers are designated 10 and 11. These three pivot arms 10 are mounted on individual rotatable shafts 12 extending from the steady rest in such a way that the support rollers 11 in their movement towards the center always divide an inscribed circle in three approximately equal portions, i.e. 120$^\circ$. It is evident from the drawing that the shafts 12 for the left-hand or front pivot arm and for the underlying pivot arm are arranged adjacent to each other and that the left-hand arm straddles the underlying arm and that these two arms are coupled to each other for synchronous movement with a steel band coupling 13. The left-hand arm 10 also has a lever 14 which extends downwards and is connected by means of the pin 15 to a hydraulic pressure cylinder 16 with piston 17. The rear portion of the pressure cylinder 16 is journalled in two lugs 19 in the steady rest housing 20 by means of a pin 18. The pin 18 conducts pressure fluid through the holes 21 from the machine hydraulic system via the rear portion of the cylinder 16 to the piston 17.

The right-hand or upper arm 10 has, as does the left-hand arm, a downwardly extending lever 22 which is only half as long as the lever 14 however. This lever 22 is connected via pin 23 to a pressure cylinder 24 of approximately the same size mounted above hydraulic cylinder 16. The piston 25 in the cylinder 24 is at its forward end securely journalled by means of the pin 26 in two lugs 31 in the steady rest housing 20. The pin 26 conducts pressure fluid, as does the pin 18, together with the piston 25 through holes 27 to act on the rear surface of the cylinder 24 and the lever 22.

Both of the hydraulic cylinders 16 and 24 with their piston 17 and 25 are only described here as single acting pressure cylinders. To obtain a return movement when the pressure fluid volume is reduced, two tension springs 28 are arranged on either side of attachment lugs 29 and 30 on levers 14 and 22.

As can be seen in the drawing, the pivot arms 10 with the rollers 11 are shown in the position for maximum diameter of the round workpiece to be centered. In this position of the pivot arms, the cylinder pistons 17 and 25 are also maximally inserted into their respective cylinders 16 and 24 by the tension springs 28. But in cylinder 24 there is, as is shown in the drawing, still some space left between the cylinder bottom and the piston 25 so that when all the fluid leaves that space, the movement of the cylinder 24 by the tension springs 28 will then be stopped by the piston 25. The right hand pivot arm will then swing up to its vertical position for insertion or removal of the workpiece.

As is shown in the drawing and the above description, the force for the left-hand pivot arm 10 and the underlying pivot arm 10 is obtained from the hydraulic cylinder 16,17 and the force to the right-hand or upper pivot arm 10 is obtained from the hydraulic cylinder 24,25.

In order to sense and control the positions of the two first mentioned pivot arms synchronously with the position of the last mentioned pivot arm, electrical position sensors 32 and 33 are built into the steady rest housing and are actuated by the levers 14 and 22 via the pistons 17 and 25. These two position sensors 31 and 32 are coupled to a control unit which controls the flow of fluid to the hydraulic cylinders and the pressure therein via a compu- ter which computes the correct position of the pivot arms to center a given workpiece and adapt the force of the support rollers 11 to the value required to center the workpiece during machining. The control unit also sees to it that the upper or right hand pivot arm 10 opens fully when a workpiece is inserted or removed from the steady rest. In order to obtain a mathematical relationship between the cylinder positions for the entire gripping range of a steady rest according to the invention, this relationship can easily be programmed into the computer which then controls the steady rest. Compensation for errors in the position sensor is done when testing in a machine tool, by means of a carefully made master. The present invention is not limited to the embodiment descri- bed here and shown in the drawing. Rather it can be varied in various ways within the scope of the patent claims.

CLAIMS

1. Self-centering steady rest for lathes and similar machine tools, where the steady rest is provided with three gripping arms with associated support rollers, characterized in that the three pivotable gripping arms (10) with support rollers (11) are of equal length and have the same outward bending stiffness when the force on the arms (10) is changed after the steady rest is set in the machine tool, and that the magnitude of the changed force on the arms (10) is adapted via a computer or control unit to the value required to center the workpiece for machi- ning thus holding the centering deviation between the grip center of the steady rest and the center of the cylindri- cal workpiece to a minimum or nearly zero as well as increasing the life of the support rollers (11).

2. Self-centering steady rest according to Claim 1, characterized in that the three pivoting gripper arms (10) with support rollers (11) are mounted on individual rotatable shafts (12) extending from the steady rest, said shafts (12) being placed in the steady rest (20) so that the support rollers (11) as the arms (10) move from the smallest to the largest gripping diameter always divide a circle into approximately three equal parts or 120°.

3. Self-centering steady rest according to Claim 1 or 2, charcterized in that one of the pivoting gripper arms (10) with support rollers (11), such as the upper or right-hand arm, has an extended opening movement to permit workpieces corresponding to the maximum gripping diameter to be inserted and removed by an industrial robot or bridge loader.

4. Self-centering steady rest according to Claims 1-3, characterized in that the three pivoting gripper arms (10) with support rollers (20) are manouvered by two hydraulic cylinders (16,17 and 24,25), the upper or right arms with extended opening movement being manouvered by the cylinder (24,25).

5. Self-centering steady rest according to Claims 1-4, characterized in that of the two pivoting gripper arms (10) that to the left and that under the gripping center of the steady rest, have their rotational axes (12) located in the steady rest close to each other and are coupled together for synchronous rotation by a steel band coupling (13).

6. Self-centering steady rest according to Claims 1-5, characterized in that for synchronizing of the movement of the two hydraulic cylinders (16,17 and 24,25) and for sensing the positions of the pivoting gripper arms (10), both of said hydraulic cylinders are provided with individual sensors (32,33) of suitable differential transformer type, said sensors being coupled to a suitable control unit.

7. Self-centering steady rest according to Claims 1 and 4, characterized in that for return movement of the hydraulic cylinder (16,17 and 24,25), two tension springs (28) are fixed to mountings (29 and 30) on the levers (14 and 22) for the respective hydraulic cylinders.

8. Self-centering steady rest according to Claims 3, 4 and 7, characterized in that the hydraulic cylinders (24,25) permit a relatively greater return movement than the cylinder (16,17), whereby the action of the tension spring (28) when all the pressure fluid is removed from the cylinder (24,25) imparts to the upper or right-hand pivot arm (10) a complete extended opening movement.

FIG.1

FIG.2